# EUROPÄISCHE PATENTSCHRIFT

(11) **EP 1 451 128 B1**
(45) Veröffentlichungstag und Bekanntmachung des Hinweises auf die Patenterteilung: **26.10.2005**
(21) Anmeldenummer: 02798298.2
(22) Anmeldetag: 20.12.2002
(51) Int. Cl.: C04B 41/45, C04B 41/48, E04D 5/06, E04B 1/66

(54) **VERFAHREN ZUR BESCHICHTUNG EINES ZEMENTHALTIGEN FORMTEILES**
METHOD FOR COATING A CEMENT-CONTAINING MOLDING PIECE
PROCEDE PERMETTANT D'APPLIQUER UN REVETEMENT SUR UNE PIECE MOULEE CONTENANT DU CIMENT

(30) Priorität: 22.12.2001 DE 10163930
(43) Veröffentlichungstag der Anmeldung: 01.09.2004
(73) Patentinhaber: Henkel KGaA, 40589 Düsseldorf (DE); Roland Wolf GmbH, 89155 Erbach (DE)
(72) Erfinder: WELTER, Werner, 59427 Unna (DE); WOLF, Roland, 89151 Erbach (DE)
(74) Vertreter: Mann, Volker
(86) Internationale Anmeldenummer: PCT/DE2002/004697
(87) Internationale Veröffentlichungsnummer: WO 2003/055828

(56) Entgegenhaltungen:
- EP-A- 0 796 951
- WO-A-95/10574

## Beschreibung

Die Erfindung betrifft ein Verfahren zur Beschichtung eines zementhaltigen Formteiles sowie danach herstellbare zementhaltige Formteile.

Unter Zement versteht man ein feingemahlenes hydraulisches Bindemittel, welches überwiegend aus Calciumsilikaten, -Aluminaten und -Ferriten besteht, zur Herstellung von synthetischen Steinen bestimmter Form (= zementhaltige Formteile). Die wichtigsten zementhaltigen Formteile sind Formteile aus Beton, welche durch Erhärten eines Gemisches von Zement, Betonzuschlag und Wasser sowie gegebenenfalls Betonzusatzmitteln und Betonzusatzstoffen herstellbar sind (siehe DIN 1045). Der größte Teil des Betons wird in der Bauwirtschaft zur Herstellung von Betonbauwerken verwendet. Diese sollen möglichst lange halten und auch dekorativ aussehen. Dazu werden sie beschichtet, wobei ein flüssiger Stoff, z.B. ein Farbstoff, ein Klebstoff oder eine Dichtungsmasse auf das fertig ausgehärtete Betonbauwerk aufgetragen wird und nach seinem Abbinden daran mehr oder weniger fest und dauerhaft haftet (siehe DIN 8580).

Die Güte der Haftung ist gerade für Bauwerke von besonderer Bedeutung, z.B. bei der Abdichtung von Hohlräumen in oder an der Oberfläche von Betonbauwerken. Die Lösung dieser Aufgabe ist nämlich sehr schwierig und aufwendig. Wenn es zum Wassereintritt durch Undichtigkeit der Bauwerkshülle kommt, ist es ganz besonders problematisch, die Leckage zu orten, durch die das Wasser eindringt. Dies ist besonders dann sehr schwierig, wenn zur Abdichtung eine dichte Folie oder Bahn benutzt wird, da diese Bahn nach Beschädigung zwischen Bahn und Betonoberfläche unterläufig ist und das Wasser kaum nachvollziehbare und nicht berechenbare Wege nehmen kann. Diese Wege sind durch die Freiräume zwischen der ebenflächigen Bahn und der rauhen Betonoberfläche in jeder Richtung und praktisch über die gesamte Oberfläche gegeben.
Bekannt sind Abdichtungen von Betonbauwerken, bei denen wasserdichte Bahnen auf die Oberfläche von festen, abgebundenen Betonbauwerken geklebt werden. Die Bahnen können auch lose verlegt und durch Auflage beschwert werden. Wenn die so verlegte Bahn beschädigt wird, kann Wasser eindringen, das nicht nur im Bereich der Schadstelle zu Wasserschäden führt. Vielmehr kommt es dabei zum Unterlaufen der Dichtungsbahn, d. h. das Wasser läuft im ganzen Bereich zwischen Dichtungsbahn und Betonkörper und verbreitet sich dabei unkontrolliert und kann an irgendwelchen Stellen in den Beton eindringen oder an Fugen einlaufen. Dadurch wird die Ortung der Schadstelle und die Analyse der Schadensursache erheblich erschwert. Dies Problem trifft sehr häufig bei einlagigen, aber auch bei mehrlagigen Abdichtungen auf.

Die im Stand der Technik bekannten Lösungen sehen vor, daß auf den festen, abgebundenen Betonkörper, der eine unebene und nicht anpassungsfähige Oberfläche hat, mindestens eine Bahn zur glättenden Abdeckung aufgebracht wird. Dabei wird im allgemeinen die Bahn betonseitig mit einer Klebmasse an den Betonkörper angeklebt, wobei diese Klebmasse gleichzeitig auch die glättende Abdeckung gewährleistet. Die Unebenheit der Oberfläche abgebundener Betonkörper wird u.a. auch dadurch verursacht, daß der Beton beim Abbinden in einem gewissen Maß schwindet, so daß oberflächennahe Teile der körnigen Zuschlagstoffe als Erhebungen aus der Oberfläche herausragen.

Der Stand der Technik kennt verschiedene Arbeitstechniken. Zum einen wird auf die Oberfläche eine in der Regel bituminöse Bahn aufgeklebt. Wenn es bauphysikalisch erforderlich ist, kann sie auch eine Metallbandeinlage als Wasserdampfdiffusionssperre enthalten. Diese Bahn kann konventionell mit Klebern verklebt werden, in der Regel aber wird sie unterseitig zumindest punktweise mittels offener Flamme erwärmt und so auf den Beton geklebt. Auf dieser dann ebenen Oberfläche erfolgt der weitere Dachaufbau inklusive Wärmedämmung oder aber die Aufbringung der eigentlichen Dachabdichtungsbahn. Bei einer weiteren Arbeitstechnik wird eine entsprechend dicke PYE-Bitumenschweißbahn auf der dem Beton zugewandten Seite mittels offener Flamme so weit verflüssigt, dass beim Andrücken Unebenheiten der Betonoberfläche ausgefüllt und damit keine Unterläufigkeit zwischen dieser PYE-Bahn und der Betonoberfläche mehr möglich ist. Diese PYE-Bahn ist aber nicht die eigentliche Abdichtung. Diese wiederum besteht aus einer PVC-P-Bahn. Bei der Aufbringung dieser PVC-P-Bahn auf der bereits verlegten PYE-Bahn wird die Oberfläche der PYE-Bahn wiederum mittels offener Flamme so weit erhitzt und verflüssigt, dass die eigentliche Dichtungsbahn (PVC-P) satt und hohlraumfrei eingebettet (verklebt) wird. Im Anschluss daran müssen noch die Überlappungen thermisch oder chemisch verschweißt werden, um die endgültige Abdichtung sicherzustellen.

Aus der DE 196 11 297 sind Tiefbauabdichtungen mit betonseitig beschichteten Dichtungsbahnen bekannt. Sie haben einen dreischichtigen Aufbau, wobei die eigentliche Dichtungsbahn aus einem Material der Gruppe von PVC-P, PE und Bitumen besteht, die mit einer 0,8 mm dicken Klebemasse aus einem Gemisch von Weichbitumen, Styrol/Butadien/Styrol und synthetischen Harzen beschichtet ist, und schließlich durch eine Trennfolie geschützt wird. Die übliche Anwendungsweise des in dieser Druckschrift beschriebenen Verfahrens sieht vor, daß die Dichtungsbahn auf die Gießsohle oder Seitenschalung derart ausgebreitet wird, daß die Beschichtung betonseitig angeordnet ist. Auf diese Weise kommt es beim Vergießen des frischen Betons zu einem Kontakt zwischen frischen Beton und Dichtmasse, wobei diese miteinander reagieren und eine Abdichtung des Betonkörpers nach unten oder zur Seite bilden. Dabei macht sich das Verfahren den Umstand zunutze, daß der hydrostatische Druck des auf- oder gegenliegenden frischen Betons zu einer Druckbeaufschlagung zwischen Beton und Beschichtung führt.

Es ist auch bekannt, Betonformteile zu beschichten, z.B. mit einer Farbdispersion oder mit einer hydrophobierenden Silikon-Dispersion oder mit einem Klebstoff, insbesondere einem Schmelzklebstoff. Dabei werden die flüssigen Beschichtungsmassen auf die erhärteten Betonformteile aufgetragen und haften nach dem Abbinden mehr oder weniger fest daran. Nachteilig bei diesem bekannten Verfahren der Beschichtung ist nicht nur, daß ein zusätzlicher Arbeitsschritt notwendig ist, sondern daß die Güte der Haftung auch stark von der Vorbehandlung abhängt. Das gilt insbesondere für eine Farbschicht sowie eine Klebstoffschicht. Die Beschichtung kann aber auch trotz sorgfältiger Arbeit unbefriedigend sein, da sie bald ihre Wirkung verliert, z.B. die Hydrophobierung von Gehplatten mit Silikon-Dispersionen, um so den Wuchs von Algen und Moosen zu behindern.

Daraus ergibt sich die erfindungsgemäße Aufgabe, ein Verfahren zu finden, das eine Beschichtung von zementhaltigen Formteilen ermöglicht, und zwar auf einfache und zuverlässige Art mit ausreichend hoher Haftung über die ganze Fläche. Dabei sollte nicht nur die Handhabung einfach sein, sondern auch die für die Beschichtung notwendigen Stoffe. Insbesondere sollte ein Verfahren gefunden werden, welches speziell für die Abdichtung von Hohlräumen in oder an der Oberfläche von Betonbauwerken gegen von außen eindringendes Wasser geeignet ist.

In der EP 0 796 951 A1 wird beschrieben, dass Frischbeton mit Dichtungsbahnen zusammengebracht wird, die mit einer Klebmasse beschichtet sind. Es werden Klebmassen mit einer Mindestdicke von 0,8 mm beschrieben.

In der WO 95 10575 A werden wasserdichte Membranen und weitere Abdeckungen beschrieben, die auf ausgehärteten Beton aufgebracht werden.

Es wurde ein Verfahren zur Beschichtung eines zementhaltigen Formteils gefunden, das dadurch gekennzeichnet ist, dass eine feste, plastisch dicke Beschichtung mit einer Dicke im Bereich von 0,2 bis 0,7 mm, mit oder ohne einen ein- oder beidseitig beschichteten Träger, mit der noch flüssigen, verformbaren zementhaltigen Masse zur Herstellung des zementhaltigen Formteils mit oder ohne Druck bis zu ihrem Erhärten zusammengebracht wird.

Unter Zement ist ein hydraulisches Bindemittel zu verstehen, welches überwiegend aus Calcium-Silikat, -Aluminat und -Ferrit besteht. Der feingemahlene Zement ergibt mit Wasser sowie gegebenenfalls anderen Zusätzen zunächst eine flüssige verformbare Masse, die sich durch ihre Fähigkeit auszeichnet zu einem festen Stein abzubinden (zu erhärten). Das Verfahren ist für alle Zementarten geeignet, insbesondere für Portlandzement (CEMI), Portland-Komposit-Zement (CEMII) und Hochofenzement (CEMIII).
Üblicherweise enthält die zementhaltige Masse nicht nur Wasser und Zement, sondern entsprechend der Anwendung weitere Stoffe. Die zementhaltige Masse umfaßt daher z.B. Estriche, Spachtelmassen, Mörtel und insbesondere Beton, z.B. SCC-Beton (selbstverdichtender Beton).

Vorzugsweise wird das erfindungsgemäße Verfahren bei Beton angewendet, also bei der Herstellung eines künstlichen Steines, der aus einem Gemisch von Zement, Betonzuschlag und Wasser sowie gegebenenfalls auch mit Betonzusatzmitteln und Betonzusatzstoffen durch Erhärten entsteht (siehe DIN 1045; 07/1988). Das erfindungsgemäße Verfahren eignet sich für alle üblichen Betonarten, insbesondere um Beton-Bauwerke oder Teile davon, hergestellt aus Normal- und Schwer-Beton, aber auch aus Faserbeton, Fließbeton, Spritzbeton oder Leichtbeton. Als Betonzuschlag kommen üblicherweise in Frage: Gesteine, Glas, Metalle oder Kunststoff. Als Betonzusatzmittel kommen üblicherweise in Frage Luftporenbildner, Einpreßhilfen, Verflüssiger, Erstarrungsverzögerer sowie Erstarrungsbeschleuniger. Bei den Betonzusatzstoffen handelt es sich üblicherweise um mineralische Stoffe wie Bentonit, Flugasche, Hochofenschlacke und Gesteinsmehl sowie um Zementfarben, wie z.B. Oxide des Eisens, des Chroms oder des Titans und Ruß oder um organische Betonzusatzstoffe wie Thermoplasten, Kautschuk, Bitumen usw..

Konkrete zementhaltige Formteile sind z.B. Fliesen für Gehwege und Terrassen, die mit einer transparenten Silikonfolie beschichtet sind, um eine Korrosion durch Moos und Algen zu behindern. Weiterhin kommen in Frage Kübel und L-Steine, die mit einer dekorativen Beschichtung anstelle eines Lackanstriches versehen sind. Unter einem zementhaltigen Formteil ist insbesondere ein Betonbauwerk oder Teile davon zu verstehen, wie z.B. ein Betonfertigteil, ein Kühlhaus, eine Saunaanlage, eine Deponie, eine Kläranlage, ein Tunnel, eine Tankstelle, ein Reaktorbau, eine Brückenabdichtung, eine Gründung von Bauwerken in belastetem Erdreich, eine Abdichtung von Kellerbauwerken, eine Abdichtung von Flachdächern, eine Abdichtung von Dächern unter Begrünung, ein Umkehrdach, eine Hofkellerdecke, eine Tiefgarage (außen und unter Begrünung oder mit Pflaster) sowie Überwege.

Dabei wird das erfindungsgemäße Verfahren hauptsächlich zur Verklebung mit einer weiteren Schicht verwendet, indem nach dem Abbinden des Betons und der Reaktion der Dichtmasse mit dem frischen Beton ein weiterer Belag auf die Außenoberfläche des Bauwerks aufgebracht wird, insbesondere ein begeh- und/oder befahrbarer Belag. Dieser Belag kann vor allem ein Gründach oder ein Pflaster oder eine Plattierung oder ein Fahrbahnbelag sein.

Für den erfindungsgemäßen Verbund sind die Eigenschaften der Beschichtung von entscheidender Bedeutung. Die Beschichtung kann zunächst formlos sein (= Beschichtungs-Masse). Sie kann aber auch eine Form haben, z.B. eine Folie oder Bahn darstellen (Beschichtungs-Folie). Bevorzugt ist die Beschichtungs-Folie. Die Beschichtung hat in Abhängigkeit von der Temperatur eine flüssige, pastöse oder feste Konsistenz. Vorzugsweise ist sie jedoch fest oder wird fest beim Kontaktieren mit der flüssigen, verformbaren zementhaltigen Masse. Die Beschichtung muß fest, und plastisch sein, und ihre Dicke muß im bereich von 0,2 bis 0,7 mm liegen.

Die Beschichtung muß bei 20 °C fest sein. Als Maß dafür (Kohäsion) wurde die Reißkraft von mehr als 0,1, insbesondere mehr als 0,5 N/50 mm angesehen, gemessen nach DIN 53354 mit dem Probekörper A nach Tabelle 1 und der Prüfgeschwindigkeit nach DIN 53455 von 50 mm/Min. ± 10 % sowie nach den Prüfbedingungen A bis V. Um diese Anforderung zu erfüllen, sollte die Schmelz- oder Erweichungstemperatur oberhalb von 20, vorzugsweise oberhalb von 80 und insbesondere oberhalb von 120 °C liegen, gemessen nach DIN 52011. Im Sinne der Erfindung sind alle abgebundenen Klebstoffe fest, ebenso Haftklebstoffe.

Neben der Kohäsion ist die Plastizität der Beschichtung von wesentlicher Bedeutung. Darunter ist hier die Möglichkeit zu verstehen, daß bei der Auskristallisation der zementhaltigen Masse die Kristallstrukturen in die Beschichtung eindringen können. Als Maß dafür wird die Nadelpenetration nach DIN 52011 angesehen. Sie sollte im Bereich von 20 bis 200/10 mm und insbesondere im Bereich von 50 bis 100/10 mm liegen. Für die Haftung der Beschichtung an dem zementhaltigen Formteil ist es also nicht notwendig, daß die Beschichtung selbst klebrig ist oder in Gegenwart der wäßrigen, flüssigen verformbaren zementhaltigen Masse klebrig wird, z.B. wegen der Verwendung von wasserlöslichen oder wasserquellbaren Bindemitteln in der Beschichtung. Die Beschichtung ist also vorzugsweise kein Haftklebstoff, so daß dann auch auf eine Schutzschicht z.B. aus Polyethylen verzichtet werden kann. Diese fehlende Klebrigkeit wird durch die Schälfestigkeit definiert. Sie soll nach UEATc (Dez. 2001) bei Raumtemperatur und einer Schälgeschwindigkeit von 100 mm/Min. sowie einem Schälwinkel von 90 ° auf einem Stahluntergrund bei einer Klebzeit von 15 Min. zweckmäßigerweise weniger als 4 N/50 mm betragen, insbesondere weniger als 0,5 N/50 mm.

Für die "Adhäsion" der Beschichtung an dem zementhaltigen Formteil ist aber nicht nur die Plastizität entscheidend, sondern auch eine Mindestschichtdicke. Die Dicke der Beschichtung liegt im Bereich von 0,2 bis 0,7 mm, insbesondere im Bereich von 0,2 bis 0,4 mm. Diese Bereiche gelten vor allem dann, wenn die Beschichtung als Klebstoffschicht dient und durch eine weitere Schicht belastet wird, z.B. durch Fliesen. Dann empfiehlt es sich in dem bevorzugten Bereich der Dicke zu bleiben, um einen kalten Fluß der Beschichtung zu verhindern.

Wenn die Beschichtung der Abdichtung von Hohlräumen in oder an der Oberfläche von Betonbauwerken gegen eindringendes Wasser dient, dann sollte sie wasserundurchlässig sein, aber je nach den Anforderungen Wasserdampf durchlassen oder nicht, was durch eine Wasserdampfdurchlässigkeit nach DIN 52615 durch einen µ-Wert von vorzugsweise mindestens 0, vorzugsweise mindestens 100 und vor allem mindestens 20 000, wenn der Schwerpunkt auf der Wasserdampfdurchlässigkeit liegt, gekennzeichnet wird. Natürlich kann die Beschichtung auch wasserdampfundurchlässig sein, wenn es erwünscht ist. Dann empfiehlt sich ein µ-Wert von max. 1 Million.

Neben den Hauptaufgaben der Beschichtung "(Adhäsion" und Kohäsion) kann sie auch noch zusätzliche Aufgaben übernehmen, wie die bereits oben erwähnte Feuchtigkeitsundurchlässigkeit oder die wasserabstoßende bzw. wasseranziehende Eigenschaft. Diese und weitere Eigenschaften wie z.B. Alterungsbeständigkeit und Aussehen hängen stark von dem Material der Beschichtung ab. In der Regel handelt es sich dabei um mindestens ein Polymer, sei es ein Homo- oder ein Copolymer, welches vorzugsweise durch Zusätze modifiziert ist, wie z.B. durch Harze, Weichmacher, Füllstoffe und Fasern. Als Polymer sind insbesondere brauchbar Kautschuke und Elastomere wie z.B. Naturkautschuk, Styrol/Butadien-Kautschuk, Silikon, Polyurethan, Styrol/Butadien/Styrol-Triblock-Copolymere oder Styrol/Isopren/Styrol-Triblock-Copolymere, aber auch Polymere wie die Polyolefine Polyisobuten, Polybuten und ataktisches Polypropylen, sowie Ethylen/Vinylacetat-Copolymer und Polyacrylsäureester. Für die Auswahl von Kautschuken und Elastomeren spricht ihre hohe Reißdehnung von mehr als 100, insbesondere mehr als 200 %. Sie ist vor allem dann zweckmäßig, wenn die Beschichtung an Ecken stark gekrümmt wird. Im allgemeinen reicht aber, wenn die feste Beschichtung eine Reißdehnung von mehr als 10, insbesondere von mehr als 50 % hat, gemessen nach DIN 53354 mit dem Probekörper A nach Tabelle 1 und mit einer Prüfgeschwindigkeit nach DIN 53455 von 50 mm/Min. ± 10 %, und zwar nach Prüfbedingungen A bis V. Die Polymere sollten zweckmäßigerweise nicht wasserlöslich sein, da dann die Gefahr besteht, daß sich bei Einwirkung von Feuchtigkeit der Verbund löst. Insbesondere sind nicht zweckmäßig: Polyvinylpyrrolidon, Polyvinylalkohol, Polyethylenimin sowie Homo- und Copolymere der (Meth)acrylsäure und ihrer Derivate sowie der Malein-, Vinylsulfon- und Vinylphosphonsäure. Neben diesen synthetischen Polymeren sind aber auch natürliche wasserlösliche Polymere unzweckmäßig, z.B. Stärke, Casein, Gelatine sowie Celluloseether. Wegen ihrer geringen Wasserlöslichkeit sind Polyolefine bevorzugt.

Wenn durch die zweckmäßige Auswahl geeigneter Polymerer einschließlich ihrer Zusatzstoffe der gewünschte Effekt bereits erreicht wird, ist ein Träger für die Beschichtung nicht notwendig. Das gilt insbesondere, wenn die Beschichtung eine Dekorfolie ist und dadurch ein nachträgliches Anstreichen sich erübrigt. Es gibt aber auch Fälle, in denen die Beschichtung nicht oder nicht vollständig den gewünschten Effekt erfüllt, dann ist ein geeigneter Träger zweckmäßig, der ein- oder beidseitig beschichtet bzw. imprägniert sein kann. Der Träger kann natürlicher oder synthetischer bzw. organischer oder mineralischer Art sein, z.B. aus Glas, Metall, Holz und Kunststoff bestehen, wobei vorzugsweise der Kunststoffträger eine Folie ist, z.B. aus Hochdruck-Polyethylen oder Polyvinylchlorid, oder ein textiles Flächengebilde einschließlich einer faserverstärkten Folie, wie z.B. aus Polyethylenterephthalat/Polypropylen. Der Träger ist vorzugsweise eine Folie oder eine Platte. Er kann aber auch eine beliebige Form haben. Die Beschichtung befindet sich möglicherweis auf einem Träger, z.B. auf Platten aus beschichtetem, lackiertem oder eloxiertem Aluminium oder auf Platten aus Polystyrol, PMMA, PC, PVC, ABS oder auf Dekorfolien, insbesondere auf einem Aluminium-Laminat. Die Beschichtung kann sich aber auch auf einem textilen Träger befinden, z.B. auf einem Gewebe, Gewirke, Gelege oder auf einem Vlies sowie einer Kombination davon, z.B. auf Vlies/Gelege. Die Beschichtung kann sich aber auch auf einer Nutzschicht als Träger befinden, z.B. auf einer Dachdichtungsbahn. Zum Abdichten von Hohlräumen in oder an der Oberfläche von Betonbauwerken gegen eindringendes Wasser wird vor allem eine Dichtungsbahn verwendet, wobei die abdichtende Beschichtungsmasse aus einem Gemisch von Weichbitumen, Styrol/Butadien/Styrol-Blockcopolymeren und synthetischen Harzen besteht und als Träger eine bitumenbeständige Bahn, beispielsweise aus PVCP oder aus PE verwendet wird.

Das erfindungsgemäße Verfahren wird im allgemeinen folgendermaßen ausgeführt:
1. Man nimmt eine Form, z.B. ein Werkzeug oder man stellt die Form durch eine Verschalung her. Dann wird diese Form mit der festen, plastischen Beschichtung mit einer Dicke im bereich von 0,2 bis 0,7 mm mit oder ohne Träger ausgekleidet oder mit der erwärmten und flüssigen bzw. pastösen Beschichtungs-Masse bedeckt, z.B. durch Aufsprühen einer Schmelze von z.B. 100 °C, die dann bei 20 °C fest wird.
2. In diese ausgekleidete Form wird die noch flüssige verformbare zementhaltige Masse zur Herstellung des zementhaltigen Formteiles gegossen, die wie üblich aus Zement, Wasser, Zuschlagstoffen und Zusätzen angemacht wurde.
3. Wie üblich wird für eine vollständige und luftfreie Befüllung gerüttelt, gestoßen usw.. Häufig genügt der eigene (hydrostatische) Druck.
4. Zusätzlich oder anstelle der Form-Auskleidung kann man die zementhaltige Masse mit einer festen, plastischen Beschichtung mit einer Dicke im bereich von 0,2 bis 0,7 mm oder mit ihrer Schmelze bedecken. Um eine Blasenbildung zwischen der aufliegenden Beschichtung und der zementhaltigen Masse zu vermeiden, genügt es, die anfangs vorhandene Luft zu entfernen. Zweckmäßigerweise sorgt man durch eine leichte Auflage, z.B. von Sand für einen direkten Kontakt. Unter Umständen ist es auch möglich, eine luftdurchlässige Beschichtung zu verwenden.
5. Man wartet - wie üblich (Temperatur und Zeit) -, bis die zementhaltige Masse erhärtet ist.

Es werden zementhaltige Formteile erhalten, die vollflächig mit der Beschichtung innig verbunden sind, auch wenn die Beschichtung selbst nicht klebrig war. Die Bindung wird nämlich wahrscheinlich durch die Kristalle des Zementes bewirkt, welche in die Beschichtung eingedrungen sind. Von ihrer Art, ihrer Länge und ihrer Anzahl hängt die Intensität der Bindung ab.

Je nachdem welchen Stand der Technik man zum Vergleich heranzieht, hat man folgende Vorteile:
1. Es genügt eine einschichtige Folie als Beschichtung. Es muß also nicht eine dreischichtige Folie sein mit einem Trägermaterial, einer haftklebrigen Beschichtung und einer Schutzschicht.
2. Die Beschichtung ist zweckmäßigerweise nicht klebrig. Daher ist eine Schutzschicht nicht notwendig, ebenfalls ihre Entsorgung nicht.
3. Bei geeigneter Auswahl des Materials der Beschichtung hat diese bereits die gewünschte Eigenschaft, z.B. Wasserundurchlässigkeit oder Farbigkeit. Man benötigt also nicht eine zusätzliche Schicht mit diesen Eigenschaften.
4. Die Beschichtung kann relativ dünn sein, wodurch die Handhabbarkeit wesentlich erleichtert und die Beschichtung insgesamt verbilligt wird. Außerdem sind feine Konturen der zementhaltigen Anteile viel deutlicher zu sehen, z.B. eine Holzmaserung.
5. Die Entschalung ist auch ohne Schalöle möglich.
6. Man erhält zementhaltige Formteile, z.B. L-Steine mit einer Dekorschicht in einem einzigen Arbeitsgang schon bei der Herstellung. Die Reinigung von zementhaltigen Formkörpern, Grundierung und das Anstreichen mit einer Dispersionsfarbe ist nicht nötig.
7. Man kann Gehwegplatten erhalten mit einer viel dauerhafteren hydrophoben Silikonschicht, als es durch Auftragen einer Silikon-Dispersion auf fertige zementhaltige Formteile möglich ist.
8. Das erfindungsgemäße Verfahren eignet sich insbesondere zum Abdichten von Hohlräumen in Betonbauwerken gegen eindringendes Wasser bei Verwendung einer wasserdichten Beschichtung, insbesondere aus Weichbitumen, Styrol/Butadien/Styrol-Blockcopolymeren und synthetischen Harzen, was mit folgenden Vorteilen verbunden ist:

Die abdichtende Wirkung ist nicht davon abhängig, daß eine in sich dichte Bahn oder Folie, die als solche die Abdichtung gegen Wasser bewirkt und möglichst vollflächig auf die Betonoberfläche geklebt wird, unbeschädigt ist oder bleibt. Vielmehr reagiert die Dichtmasse, die gleichmäßig auf die Oberfläche aufgebracht wird, mit dem frischen Beton und bildet dabei eine wasserundurchlässige und wasserunlösliche Verbindung, die eine wasserdichte Schicht bildet.

Weiterhin hat das erfindungsgemäße Verfahren den Vorteil, daß die Dichtmasse auf den frischen Beton aufgebracht wird, der an sich schon oder nach dem Abziehen auf die gewollte Höhe eine relativ glatte Fließoberfläche bildet und nicht durch eine rauhe Oberfläche, wie sie für abgebundenen Beton typisch ist, die Bildung von Fehlstellen begünstigt, die nicht abgedichtet sind und eintretendem Wasser den Raum für ein unkontrolliertes Verlaufen bietet. Unter frischem Beton wird hier Beton in der Übergangszeit zwischen Anmischen und Erstarren verstanden. Sobald der Beton in seiner Form nicht mehr veränderbar ist, spricht man von jungen Beton.

Die Gleichmäßigkeit des Aufbringens der Dichtmasse besagt, daß vollflächig eine gewisse Schichtdicke der Dichtmasse eingehalten und Mindeststärken von zweckmäßigerweise mindestens 0,3 mm nicht unterschritten werden. Das Aufbringen der pastösen oder flüssigen Beschichtungsmasse kann z. B. auch durch Rakeln, Gießen oder Spritzen erfolgen, z.B. bei 100 °C unter Druck. In einer besonderen Ausgestaltung erfolgt das Aufbringen durch betonseitige Beschichtung einer Bahn, mit der z.B. die Betonoberfläche leicht abgedeckt werden kann.

Ein weiterer Vorteil besteht darin, daß bei einer äußeren Beschädigung der wasserdichten Schicht eine Eindringstelle für Wasser nur dann gebildet wird, wenn die von außen auf das Betonbauwerk einwirkende zerstörende Kraft so groß ist, daß die gesamte wasserdichte Schicht durchbrochen wird. Wenn solche schwerwiegenden äußeren Einwirkungen, die sehr selten sind, tatsächlich zu einem Eindringen von Wasser in das Betonbauwerk führen, ist bei einem nach dem erfindungsgemäßen Verfahren abgedichteten Betonbauwerk kein Raum für das Verlaufen des Wassers über die Oberfläche des Betons vorhanden. Vielmehr dringt das Wasser in die unmittelbar unter der Eindringstelle befindlichen Teile des Betonbauwerks ein und führt zu einer Benetzung der Innenoberfläche des Hohlraums, so daß die Schadstelle leicht auf wenige Zentimeter genau zu orten ist. Dies erspart erheblichen Such-, Detektions- und Freilegungsaufwand sowie entsprechende Zeiten und Kosten.

Ein weiterer großer Vorteil des vorgeschlagenen Verfahrens besteht darin, daß das aufwendige Verlegen von mindestens einer wasserdichten Bahn, in vielen Fällen in Verbindung mit dem Aufschweißen von speziellen Bitumenbahnen oder dem Aufschweißen einer bitumenbeständigen Bahn in einem weiteren Arbeitsgang erübrigt wird, so daß das vorgeschlagene Verfahren sehr viel weniger aufwendig, schneller und preiswerter ist als die bisher bekannten Verfahren. Es kommt hinzu, daß bei dem vorgeschlagenen Verfahren die sonst erforderliche mehrfache Absicherung von Fugen entfällt. Auch die steigende Sicherheit der Abdichtungsmaßnahme ist ein erheblicher Vorteil.

Von Vorteil ist auch, dass der Beton nach der vorgeschlagenen Abdichtung nicht nachbehandelt werden muss, was zu erheblichen Kosteneinsparungen führt. Außerdem ist er deutlich weniger rißanfällig, weil eine schnelle Verdunstung des Wassers vermieden wird. Die Verdunstung des Wassers, das der Beton zur eigenen Erhärtung benötigt, führt in der Regel zur Schwindrißbildung, was zu Qualitätseinbußen und Mehrkosten beiträgt.

Typische Anwendungsgebiete für das vorgeschlagene Verfahren sind die Abdichtung von Flachdächern, insbesondere auch als Vorbereitung für die Anlegung von Gründächern oder Umkehrdächern, aber auch die Abdichtung von Hofkellerdecken, Parkhäusern und Überwegen. Ein weiterer bevorzugter Anwendungsbereich ist im Tunnelbau gegeben, wo die Dichtmasse auf der Oberfläche der Außenschale für das Betonieren der Röhre aufgebracht wird.

In einer besonderen Ausgestaltung des Verfahrens wird die Dichtmasse als klebende Beschichtung einer bitumenbeständigen Bahn oder einer Folie auf die frische Betonoberfläche aufgebracht. Diese Bahn dient dabei als praktisches Hilfsmittel zur gleichmäßigen Aufbringung einer im wesentlichen gleichmäßig starken Beschichtung. Dabei bildet sich die wasserdichte und -unlösliche Schicht als Verbindung der Dichtmase mit dem frischen Beton außerhalb der Bahn oder Folie.
Das Aufbringen der Dichtmasse auf den frischen Beton unter Druck hat den Vorteil, daß der Einschluß von Luft- oder Gasblasen weitestgehend verhindert werden kann. Dazu genügt aber bereits der hydrostatische Druck, der durch die in Abhängigkeit von der Temperatur fließfähige Dichtmasse gegeben ist. Wenn die Dichtmasse als Beschichtung einer Bahn aufgebracht wird, genügt der zum Andrücken der Bahn ausgeübte Besen- oder Rakelstrich zur Entwicklung des für die Aufbringung eines blasenfreien Auftrags erforderlichen Drucks. Wenn die Seitenwände oder der Boden einer Form mit der Dichtmasse versehen werden, ist die Gefahr einer Blasenbildung praktisch nicht gegeben und man kann wie üblich verfahren.

Das vorgeschlagene Verfahren ist besonders geeignet, wenn nach dem Abbinden des Betons und der abgeschlossenen Reaktion der Dichtmasse mit dem frischen Beton ein weiterer Belag auf die Außenoberfläche des Bauwerks aufgebracht werden soll. Als Beispiele sind hier zu nennen das Aufbringen einer Wärmedämmung oder eines Gründachs, das entweder direkt auf die wasserdicht isolierte Decke oder auf die Wärmedämmung aufgebracht werden kann. Auch die Bepflasterung von Hofkellerdecken und Übergängen sind typisch geeignete Anwendungsfelder. Weiterhin sind die nach dem vorgeschlagenen Verfahren abgedichteten Decken für das Aufbringen von Pflasterungen und Fahrbahnbelägen geeignet, die dann entsprechend begehbar und/oder befahrbar sind.

Besteht die Dichtungsbahn aus PVC-P, PE oder anderen bitumenbeständigen Materialien, wird der Vorteil genutzt, daß diese Materialien für den Verbund mit dem Weichbitumengehalt der Dichtmassenmischung geeignet sind.

Die Erfindung soll nun im einzelnen erläutert werden. Die Messungen wurden wie in der allgemeinen Beschreibung angegeben durchgeführt, wenn nichts anderes angegeben wird.

### Beispiel 1

a) Die Beschichtung bestand aus einer 0,3 mm dicken klebrigen Schicht aus einer Mischung von SBS und Bitumen (B200) im Verhältnis von 10 : 90 mit einer Erweichungstemperatur von 105 ± 6 °C und einer Nadelpenetration von 70/10 mm ± 15 / 10 mm (KSK-W der Kunststoff GmbH) auf einem Träger aus einem 0,67 mm dicken beidseitig verzinktem Stahlblech. Das Blech war beidseitig beschichtet.
b) Als zementhaltige Masse wurde ein handelsüblicher Beton der Güteklasse B 25 eingesetzt. Die Zuschlagstoffe hatten eine Körnung von 0 bis 16 mm und der Wasser/Zementwert betrug 0,55.
c) Eine rechteckige Form wird mit der Beschichtung auf dem Trägermaterial ausgekleidet. Die ausgekleidete Form wird mit der zementhaltigen Masse gefüllt. Es wurden Formteile mit einer Breite von 5 cm, einer Länge von 25 cm und einer Höhe von 4,5 cm erhalten.
d) Die gefüllte Form wird in einem Trockenofen in 30 Minuten bei 120 °C behandelt. Danach fühlten sich die Formteile fest und trocken an.
e) Nach einer Lagerung von 3 Tagen (Raumklima) wurde ein Schälwert von mehr als 70 N/cm gemessen, wobei der Bruch in der Beschichtung lag.

### Beispiel 2

a) Die Beschichtung bestand aus einer nicht haftklebrigen 0,5 mm dicken kautschukartigen Polyisobuten-Folie mit einer Reißdehnung von mehr als 700 %, bei einer Reißkraft von 2,5 N/cm und mit einer Nadelpenetration von 55/10 mm ± 10 % sowie mit einer Erweichungstemperatur von 110 ± 20 °C. Die Punkte b), c) und d) waren wie im Beispiel 1.
e) Der Schälwert betrug 6 bis 7 N/cm.

### Beispiel 3

Es wird wie im Beispiel 2 vorgegangen mit der Ausnahme, daß die Polyisobuten-Folie beidseitig mit der zementhaltigen Masse in Kontakt gebracht wird.
Es wurden dieselben Schälwerte wie in Beispiel 2 erhalten, und zwar für beide Seiten.

## Patentansprüche

1. Verfahren zur Beschichtung eines zementhaltigen Formteiles, **dadurch gekennzeichnet, dass**
eine feste, plastische dicke Beschichtung mit einer Dicke im Bereich von 0,2 bis 0,7 mm,
mit oder ohne einem ein- oder beidseitig beschichteten Träger,
mit der noch flüssigen, verformbaren zementhaltigen Masse zur Herstellung des zementhaltigen Formteiles mit oder ohne Druck
bis zu ihrem Erhärten zusammengebracht wird.

2. Verfahren nach Anspruch 1, **dadurch gekennzeichnet, dass** die Dicke der Beschichtung im Bereich von 0,2 bis 0,4 mm liegt.

3. Verfahren nach einem der Ansprüche 1 und 2, **dadurch gekennzeichnet, dass** die feste Beschichtung eine Schmelz- oder Erweichungstemperatur oberhalb von 20°C, gemessen nach DIN 52011, hat.

4. Verfahren nach einem der Ansprüche 1 bis 3, **dadurch gekennzeichnet, dass** die feste Beschichtung eine Reißkraft von mehr als 0,1 N/50 mm, gemessen nach DIN 53354 mit dem Probekörper A nach Tabelle 1 und der Prüfgeschwindigkeit nach DIN 53455 von 50 mm/Minute ± 10 % und die Prüfbedingungen A bis V erfüllt sind, aufweist.

5. Verfahren nach einem der Ansprüche 1 bis 4, **dadurch gekennzeichnet, dass** die feste Beschichtung eine Reißdehnung von mehr als 10 %, gemessen nach DIN 53354 mit dem Probekörper A nach Tabelle 1 und der Prüfgeschwindigkeit nach DIN 53455 von 50 mm/Minute ± 10 % und die Prüfbedingungen A bis V erfüllt sind, aufweist.

6. Verfahren nach einem der Ansprüche 1 bis 5, **dadurch gekennzeichnet, dass** die plastische Beschichtung eine Nadelpenetration nach DIN 52010 von 20 bis 200/10 mm aufweist.

7. Verfahren nach einem der Ansprüche 1 bis 6, **dadurch gekennzeichnet, dass** die Beschichtung eine Schälfestigkeit nach UEATc (Dez. 2001) bei Raumtemperatur weniger als 4 N/50 mm beträgt, wobei eine Schälgeschwindigkeit von 100 mm/Minuten sowie einem Schälwinkel von 90 auf einem Stahluntergrund bei einer Klebzeit von 15 Minuten eingehalten wird.

8. Verfahren nach einem der Ansprüche 1 bis 7, **dadurch gekennzeichnet, dass** die Beschichtung eine Schälfestigkeit nach UEATc (Dez. 2001) bei Raumtemperatur weniger als 0,5 N/50 mm beträgt, wobei eine Schälgeschwindigkeit von 100 mm/Minuten sowie einem Schälwinkel von 90° auf einem Stahluntergrund bei einer Klebzeit von 15 Minuten eingehalten wird.

9. Verfahren nach einem der Ansprüche 1 bis 8, **dadurch gekennzeichnet, dass** die Beschichtung wasserundurchlässig ist und ihre Wasserdampfdurchlässigkeit nach DIN 52615 durch einen µ-Wert von mindestens 0 **gekennzeichnet** ist.

10. Verfahren nach einem der Ansprüche 1 bis 9, **dadurch gekennzeichnet, dass** die Beschichtung wasserundurchlässig ist und ihre Wasserdampfdurchlässigkeit nach DIN 52615 durch einen µ - Wert von mindestens 100 **gekennzeichnet** ist.

11. Verfahren nach einem der Ansprüche 1 bis 10, **dadurch gekennzeichnet, dass** es sich bei der zementhaltigen Masse um Estriche, Spachtelmassen, Mörtel oder Beton handelt.

12. Verfahren nach einem der Ansprüche 1 bis 11, **dadurch gekennzeichnet, dass** die zementhaltige Masse definiert ist durch ihre Fähigkeit, zu einem festen Stein, im wesentlichen aus Calciumsilikaten, -aluminaten und -ferriten, hydraulisch abzubinden.

13. Verfahren nach einem der Ansprüche 1 bis 12, **dadurch gekennzeichnet, dass** es sich bei dem zementhaltigen Formteil um ein Beton-Bauwerk oder um Teile davon handelt, das vor allem aus Normal- und Schwerbeton, aber auch aus Faserbeton, Fließbeton, Spritzbeton oder Leichtbeton hergestellt ist.

14. Verfahren nach einem der Ansprüche 1 bis 13, **dadurch gekennzeichnet, dass** die Beschichtung auf mindestens einem Polymeren basiert.

15. Verfahren nach einem der Ansprüche 1 bis 14, **dadurch gekennzeichnet, dass** die Beschichtung auf Kautschuken oder Elastomeren basiert.

16. Verfahren nach einem der Ansprüche 1 bis 15, **dadurch gekennzeichnet, dass** die Beschichtung auf Basis von Naturkautschuk, Styrol/Butadien-Kautschuk, Silikon, Polyurethan, Styrol/Butadien/Styrol-Triblock-Copolymere oder Styrol/Isopren/Styrol-Triblock-Copolymere, Polyolefinen, Ethylen/Vinylacetat-Copolymer und Polyacrylsäureester hergestellt ist.

17. Verfahren nach einem der Ansprüche 1 bis 16, **dadurch gekennzeichnet, dass** sich die Beschichtung auf bzw. in einem Träger befindet, sei er natürlicher oder synthetischer bzw. organischer oder mineralischer Art.

18. Verfahren nach einem der Ansprüche 1 bis 17, **dadurch gekennzeichnet, dass** sich die Beschichtung auf Platten aus beschichtetem, lackiertem oder eloxiertem Aluminium oder auf Platten aus Polystyrol, PMMA, PC, PVC, ABS oder auf Dekorfolien befindet.

19. Verfahren nach einem der Ansprüche 1 bis 17, **dadurch gekennzeichnet, dass** sich die Beschichtung auf Papier oder einem textilen Träger befindet.

20. Verfahren nach einem der Ansprüche 1 bis 17 und 19, **dadurch gekennzeichnet, dass** die Beschichtung auf einem Gewebe, Gewirke, Gelege oder auf einem Vlies, sowie einer Kombination davon, befindet.

21. Verfahren nach einem der Ansprüche 1 bis 20, **dadurch gekennzeichnet. dass** sich die Beschichtung auf einer Nutzschicht als Träger befindet.

22. Verfahren nach einem der Ansprüche 1 bis 21 zur Abdichtung von Hohlräumen in oder an der Oberfläche von Betonbauwerken gegen eindringendes Wasser unter Verwendung einer abdichtenden Beschichtungsmasse (Dichtmasse), **dadurch gekennzeichnet, dass** die abdichtende Beschichtungsmasse aus einem Gemisch von Weichbitumen, Styrol/Butadien/Styrol-Blockcopolymeren und synthetischen Harzen besteht und auf die frische, noch flüssige Beton-Außenoberfläche des Hohlraumes gleichmäßig aufgebracht wird.

23. Verfahren nach einem der Ansprüche 1 bis 22, **dadurch gekennzeichnet, dass** nach dem Abbinden des Betons und der Reaktion der Dichtmasse mit dem frischen Beton ein weiterer Belag auf die Außenoberfläche des Bauwerks aufgebracht wird.

24. Verfahren nach einem der Ansprüche 1 bis 23, **dadurch gekennzeichnet, dass** der Belag ein Gründach ist.

25. Verfahren nach einem der Ansprüche 1 bis 23, **dadurch gekennzeichnet, dass** der Belag eine Kiesschüttung ein Pflaster, eine Plattierung oder ein Fahrbahnbelag ist.

26. Zementhaltiger Formteil, **dadurch gekennzeichnet, dass** er aus einer festen, plastischen Beschichtung mit einer Dicke im Bereich von 0,2 bis 0,7 mm,
mit oder ohne ein- oder beidseitig beschichteten Träger,
mit der noch flüssigen, verformbaren zementhaltigen Masse
mit oder ohne Druck bis zu dem Erhärten
hergestellt wird.

27. Verwendung einer festen, plastischen Beschichtung mit oder ohne einem ein- oder beidseitig beschichteten Träger zur Herstellung zementhaltiger Formteile, **dadurch gekennzeichnet, dass** die Beschichtung mit einer Dicke im Bereich von 0,2 bis 0,7 mm, mit der noch flüssigen, verformbaren zementhaltigen Masse mit oder ohne Druck bis zu dem Erhärten zusammengebracht wird.

## Claims

1. Method of coating a cement-containing formed part, **characterised in that** a solid, plastic, thick coating of a thickness in the range from 0.2 to 0.7 mm, having or not having a substrate coated on one or both sides, is brought together with the still liquid, deformable, cement-containing material for producing the cement-containing formed part, with or without pressure, until the latter has cured.

2. Method according to claim 1, **characterised in that** the thickness of the coating is in the range from 0.2 to 0.4 mm.

3. Method according to either of claims 1 and 2, **characterised in that** the solid coating has a melting or softening temperature above 20°C, as measured under DIN 52011.

4. Method according to one of claims 1 to 3, **characterised in that** the solid coating has a tensile strength of more than 0.1 N/50 mm, as measured under DIN 53354 on test specimen A in Table 1 at a testing speed under DIN 53455 of 50 mm/minute ± 10%, and test conditions A to V are met.

5. Method according to one of claims 1 to 4, **characterised in that** the solid coating has an elongation at break of more than 10%, as measured under DIN 53354 on test specimen A in Table I at a testing speed under DIN 53455 of 50 mm/minute ± 10%, and test conditions A to V are met.

6. Method according to one of claims 1 to 5, **characterised in that** the plastic coating has a needle penetration under DIN 52010 of 20 to 200/10 mm.

7. Method according to one of claims 1 to 6, **characterised in that** the coating has a peel strength under UEATc (Dec. 2001) at room temperature of less than 4 N/50 mm, a peeling speed of 100 mm/minute being observed together with an angle of peel of 90 on a steel substrate, with a bonding time of 15 minutes.

8. Method according to one of claims 1 to 7, **characterised in that** the coating has a peel strength under UEATc (Dec. 2001) at room temperature of less than 0.5 N/50 mm, a peeling speed of 100 mm/minute being observed together with an angle of peel of 90° on a steel substrate, with a bonding time of 15 minutes.

9. Method according to one of claims 1 to 8, **characterised in that** the coating is impermeable to water and its permeability to water vapour under DIN 52615 is denoted by a µ value of at least 0.

10. Method according to one of claims 1 to 9, **characterised in that** the coating is impermeable to water and its permeability to water vapour under DIN 52615 is denoted by a µ value of at least 100.

11. Method according to one of claims 1 to 10, **characterised in that** the cement-containing material is screed, grouting or filling material, mortar or concrete.

12. Method according to one of claims 1 to 11, **characterised in that** the cement-containing material is defined by its ability to bond hydraulically to a solid stone composed essentially of calcium silicates, calcium aluminates and calcium ferrites.

13. Method according to one of claims 1 to 12, **characterised in that** the cement-containing formed part is a concrete structure or parts thereof which is produced principally from normal or heavy-weight concrete but also from fibre-reinforced concrete, fluid concrete, pneumatically placed concrete or lightweight concrete.

14. Method according to one of claims 1 to 13, **characterised in that** the coating is based on at least one polymer.

15. Method according to one of claims 1 to 14, **characterised in that** the coating is based on rubbers or elastomers.

16. Method according to one of claims 1 to 15, **characterised in that** the coating is produced on the basis of natural rubber, styrene-butadiene rubber, silicone, polyurethane, styrene-butadiene-styrene ABA-block copolymers or styrene/isoprene/styrene ABA-block copolymers, polyolefins, ethylene/vinyl acetate copolymer and polyacrylates.

17. Method according to one of claims 1 to 16, **characterised in that** the coating is situated on or in a substrate, be it of a natural or synthetic, or organic or mineral, kind.

18. Method according to one of claims 1 to 17, **characterised in that** the coating is situated on sheets of coated, painted or anodised aluminium or on sheets or slabs of polystyrene, PMMA, PC, PVC or ABS or on decorative films.

19. Method according to one of claims 1 to 17, **characterised in that** the coating is situated on paper or on a textile substrate.

20. Method according to one of claims 1 to 17 and 19, **characterised in that** the coating is situated on a woven fabric, knitted fabric or laid scrim, or on a nonwoven, or on a combination thereof.

21. Method according to one of claims 1 to 20, **characterised in that** the coating is situated on a wearing surface as a substrate.

22. Method according to one of claims 1 to 21 for sealing off cavities in or on the surface of concrete structures against permeating water by using a sealing coating material (sealing material), **characterised in that** the sealing coating material comprises a mixture of soft bitumen, styrene/butadiene/styrene block copolymers and synthetic resins, and is evenly applied to the fresh, still liquid, concrete outer surface of the cavity.

23. Method according to one of claims 1 to 22, **characterised in that** after the concrete has cured and the sealing material has reacted with the fresh concrete, a further covering is applied to the outer surface of the structure.

24. Method according to one of claims 1 to 23, **characterised in that** the covering is a plant-carrying roofing.

25. Method according to one of claims 1 to 23, **characterised in that** the covering is a bed of gravel, paving, tiling or a carriageway surfacing.

26. Cement-containing formed part, **characterised in that** it is produced from a solid, plastic coating of a thickness in the range from 0.2 to 0.7 mm, having or not having a substrate coated on one or both sides, and having the still liquid, deformable, cement-containing material until curing has taken place.

27. Use of a solid, plastic coating, having or not having a substrate coated on one or both sides for producing cement-containing formed parts, **characterised in that** the coating, of a thickness in the range from 0.2 to 0.7 mm, is brought together with the still liquid, deformable, cement-containing material, with or without pressure, until curing has taken place.

## Revendications

1. Procédé permettant d'appliquer un revêtement sur une pièce moulée contenant du ciment, **caractérisé en ce qu'**un revêtement solide, plastique et épais, d'une épaisseur de l'ordre de 0,2 à 0,7 mm, est assemblé avec ou sans support enduit d'un seul côté ou des deux côtés, à la masse contenant du ciment encore fluide et déformable destinée à réaliser la pièce moulée contenant du ciment, avec ou sans pression, jusqu'à son durcissement.

2. Procédé selon la revendication 1, **caractérisé en ce que** l'épaisseur du revêtement est de l'ordre de 0,2 à 0,4 mm.

3. Procédé selon l'une des revendications 1 et 2, **caractérisé en ce que** le revêtement solide a une température de fusion ou d'amollissement supérieure à 25 °C, mesurée selon DIN 52011.

4. Procédé selon l'une des revendications 1 à 3, **caractérisé en ce que** le revêtement solide présente une résistance à la rupture de plus de 0,1 N/50 mm, mesurée selon DIN 53354 avec l'échantillon d'essai A du tableau 1 et la vitesse d'essai selon DIN 53455 de 50 mm/minute ± 10% et les conditions d'essai A à V étant remplies.

5. Procédé selon l'une des revendications 1 à 4, **caractérisé en ce que** le revêtement solide présente une élongation à la rupture de plus de 10%, mesurée selon DIN 53354 avec l'échantillon d'essai A du tableau 1 et la vitesse d'essai selon DIN 53455 de 50 mm/minute ± 10% et les conditions d'essai A à V étant remplies.

6. Procédé selon l'une des revendications 1 à 5, **caractérisé en ce que** le revêtement plastique présente une pénétrabilité à l'aiguille selon DIN 52010 de 20 à 200/10 mm.

7. Procédé selon l'une des revendications 1 à 6, **caractérisé en ce que** le revêtement présente une résistance à l'écaillage selon UEATc (Décembre 2001) à la température ambiante inférieure à 4 N/50 mm, en respectant une vitesse d'écaillage de 100 mm/minute ainsi qu'un angle d'écaillage de 90 sur une base en acier avec un temps de collage de 15 minutes.

8. Procédé selon l'une des revendications 1 à 7, **caractérisé en ce que** le revêtement présente une résistance à l'écaillage selon UEATc (Décembre 2001) à la température ambiante inférieure à 0,5 N/50 mm, en respectant une vitesse d'écaillage de 100 mm/minute ainsi qu'un angle d'écaillage de 90 sur une base en acier avec un temps de collage de 15 minutes.

9. Procédé selon l'une des revendications 1 à 8, **caractérisé en ce que** le revêtement est imperméable à l'eau et sa perméabilité à la vapeur d'eau est **caractérisée** selon DIN 52615 par une valeur µ d'au moins 0.

10. Procédé selon l'une des revendications 1 à 9, **caractérisé en ce que** le revêtement est imperméable à l'eau et sa perméabilité à la vapeur d'eau est **caractérisée** selon DIN 52615 par une valeur µ d'au moins 100.

11. Procédé selon l'une des revendications 1 à 10, **caractérisé en ce que** la masse contenant du ciment sont des chapes de béton, des mastics, du mortier ou du béton.

12. Procédé selon l'une des revendications 1 à 11, **caractérisé en ce que** la masse contenant du ciment est définie par sa capacité à se lier hydrauliquement à une pierre solide, sensiblement en silicates, aluminates et ferrites de calcium.

13. Procédé selon l'une des revendications 1 à 12, **caractérisé en ce que** la pièce moulée contenant du ciment est un ouvrage en béton ou des parties d'ouvrage en béton qui est fabriqué surtout à partir de béton normal et lourd mais également à partir de béton à adjuvant fibreux, de béton fluidifié, de béton projeté ou de béton léger.

14. Procédé selon l'une des revendications 1 à 13, **caractérisé en ce que** le revêtement est à base d'au moins un polymère.

15. Procédé selon l'une des revendications 1 à 14, **caractérisé en ce que** le revêtement est à base de caoutchoucs ou d'élastomères.

16. Procédé selon l'une des revendications 1 à 15, **caractérisé en ce que** le revêtement est à base de caoutchouc naturel, de caoutchouc au styrol/butadiène, de silicone, de polyuréthane de copolymères à trois motifs styrol/butadiène/styrol ou de copolymères à trois motifs styrol/isoprène/styrol, de polyoléfines, de copolymère éthylène/acétate de vinyle et d'ester d'acide polyacrylique.

17. Procédé selon l'une des revendications 1 à 16, **caractérisé en ce que** le revêtement se trouve sur respectivement un support, qu'il soit naturel ou synthétique respectivement organique ou minéral.

18. Procédé selon l'une des revendications 1 à 17, **caractérisé en ce que** le revêtement se trouve sur des plaques d'aluminium enduit, laqué ou anodisé ou sur des plaques de polystyrol, PMMA, PC, PVC, ABS ou des feuilles décoratives.

19. Procédé selon l'une des revendications 1 à 17, **caractérisé en ce que** le revêtement se trouve sur du papier ou un support textile.

20. Procédé selon l'une des revendications 1 à 17 et 19, **caractérisé en ce que** le revêtement se trouve sur un textile tissé, tricoté, posé ou sur un non-tissé ainsi qu'une combinaison de ceux-ci.

21. Procédé selon l'une des revendications 1 à 20, **caractérisé en ce que** le revêtement se trouve sur une couche utile qui est utilisée comme support.

22. Procédé selon l'une des revendications 1 à 21 pour rendre étanche des espaces se trouvant dans ou sur la surface d'ouvrages en béton afin d'empêcher la pénétration de l'eau en utilisant une masse de revêtement réalisant une étanchéité (composant pour joint), **caractérisé en ce que** la masse de revêtement réalisant une étanchéité est constituée d'un mélange de bitume, de copolymères en masse styrol/butadiène/styrol.

23. Procédé selon l'une des revendications 1 à 22, **caractérisé en ce qu'**une autre couche est déposée sur la surface extérieure de l'ouvrage après la liaison du béton ou la réaction du composant pour joint avec le béton frais.

24. Procédé selon l'une des revendications 1 à 23, **caractérisé en ce que** la couche est un toit-terrasse avec plantations

25. Procédé selon l'une des revendications 1 à 23, **caractérisé en ce que** la couche est un remblai en gravelage, un pavage, un placage ou un revêtement de chaussée.

26. Pièce moulée contenant du ciment, **caractérisé en ce qu'**elle est fabriquée à partir d'un revêtement solide et plastique d'une épaisseur de l'ordre de 0,2 à 0,7 mm avec ou sans support enduit d'un côté ou des deux cotés, assemblé à la masse contenant du ciment encore liquide et déformable avec ou sans pression jusqu'au durcissement.

27. Utilisation d'un revêtement solide et plastique avec ou sans support revêtu d'un côté ou des deux cotés pour la fabrication de pièces moulées contenant du ciment, **caractérisé en ce que** le revêtement est assemblé, avec une épaisseur de l'ordre de 0,2 à 0,7 mm, à la masse de ciment encore liquide et déformable avec ou sans pression jusqu'au durcissement.
